# EUROPEAN PATENT APPLICATION

(11) **EP 4 116 032 A1**
(43) Date of publication of application: **11.01.2023**
(21) Application number: 21209054.2
(22) Date of filing: 18.11.2021
(51) Int. Cl.: B23Q 3/155, E21B 10/00, G05B 19/12, B23C 5/20

(54) **A PROCESSING TOOL AND A PROCESSING TOOL ASSEMBLY**

(30) Priority: 06.07.2021 EP 21184032
(71) Applicant: Seco Tools AB, 737 82 Fagersta (SE)
(72) Inventor: Gravningsbråten, Jan, 737 82 Fagersta (SE); Norgren, Susanne, 737 82 Fagersta (SE); Hammargren, John, 737 82 Fagersta (SE); Baudin, Micael, 737 82 Fagersta (SV)
(74) Representative: Sandvik

(57) **Abstract**

The invention relates to a processing tool (100, 200) comprising a tool body (110,210). The tool body (110,210) comprising a front end surface (115,215), a rear end surface (116,216),at least one side surface (117,217) connecting the front end surface (115,215) and the rear end surface (116,216), and a first coupling part (130,230) extending between a first end (118,218) and a second end (119,219), wherein the first end (118,218) is disposed at, at least any of, the front end surface (115,215), the rear end surface (116,216), or the at least one side surface (117,217), wherein the first coupling part (130,230) being one of a female coupling part (230); and a male coupling part (130); wherein the first coupling part (130,230) comprises a first identification marker (140,240) comprising identification information of the processing tool (100,200). The invention also relates to a processing tool assembly (300).

## Description

### TECHNICAL FIELD

The present invention relates to a processing tool and a processing tool assembly.

### BACKGROUND

Processing tools used for processing a workpiece material, such as metal, wood, rock, or stone are currently provided in a huge number of different variants with different properties such as materials and geometries. The suitability of a specific processing tool for a specific process is highly dependent on its properties.

Processing tools with different properties may look very similar to each other for the human eye, which makes it difficult for an operator to decide whether a specific tool is suitable for a specific process or not. In order to decide the properties of a tool, the operator usually needs to find a serial or batch number provided on the tool packaging and manually type this number in to an online catalog where its properties are listed.

This is a very time consuming work which also includes a lot of potential risk factors. For example, it is easy that an incorrect number is entered in the catalog which results in incorrect information being given to the operator. Another problem is that the original package of the tool gets lost, which results in that the serial or batch number cannot be found. A further problem is that the catalog only provides general information on a tool type level. It does not provide specific information related to a unique individual tool.

As a result, there is a risk that an unsuitable tool is used for a specific process, which may result in a low quality of the workpiece material processed by the tool.

Attempts to solve this problem have been made by providing tools with information carriers in the form of radio frequency identification (RFID) chips which are mounted to the tools by use of special chip holding units. Such a solution is disclosed in EP 1369811 A1.

A problem with these solutions is that the RFID chip tends to break easily, resulting in that the information stored in the chip will be lost.

### SUMMARY OF THE INVENTION

It is an object of the present invention to overcome, or at least partially overcome, said problem by introducing a processing tool and a processing tool assembly.

The object of the present invention is achieved by means of a processing tool comprising:
- a tool body comprising:
   - a front end surface,
   - a rear end surface,
   - at least one side surface connecting the front end surface and the rear end surface, and
   - a first coupling part extending between a first end and a second end, wherein the first end is disposed at, at least one of, the front end surface, the rear end surface, or the at least one surface, wherein the first coupling part being any of:
      - a female coupling part; and
      - a male coupling part;
   wherein the first coupling part comprises a first identification marker comprising identification information of the processing tool.

By arranging the first identification marker at the first coupling part, the first identification marker will be relatively unexposed to the exterior of the processing tool when the processing tool is mounted to a connecting tool unit. The first identification marker will then be protected from the harsh environment surrounding the processing tool when performing, for example, rock drilling, and the risk of the first identification marker being damaged is reduced.

The processing tool is preferably at least any of a metal cutting tool, a wood cutting tool, or a rock drilling tool, e.g. a milling cutter, a metal drilling tool, a turning tool or a rock drill bit. The processing tool body is commonly made of metal, such as steel. The processing tool preferably comprises at least one processing element. The processing element can be e.g. a cutting insert provided with a cutting edge for cutting a workpiece material, or a button or an insert for breaking a workpiece material. The processing element is commonly made of metal or a harder material such as cemented carbide, cubic boron nitride (CBN), cermet, ceramic, or polycrystalline diamond (PCD). The processing element can be arranged in the processing portion of the processing tool body by any common method known in the art, e.g. by brazing, "shrink-fitting", or by use of a screw. The connecting tool unit can be, for example, a drill string rod, a computer numerical control (CNC) machine part, or an adapter/extension for connecting the processing tool to a machine unit. The identification information can be e.g. an identification number identifying the tool body. Additionally, the identification information can comprise information regarding the location of the first identification marker at the processing tool. In some embodiments, the tool body may be a unique tool body, such that the specific tool may be identified. In some embodiments, the identification information may identify the type of tool body but not the unique tool body.

The first identification marker is preferably a one-dimensional or two dimensional optical machine readable code, such as a Quick Response code, a High Capacity Colored Two Dimensional Code, a European Article Number code, a DataMatrix code, or a MaxiCode.

By arranging the first identification marker as a one-dimensional or two-dimensional optical machine-readable code, it is possible to arrange the first identification marker where it is partially surrounded by metal surfaces without affecting the readability of it. This is in contrast to the case where active identification markers, such as RFID chips, are used since the metal surfaces, in this case, causes interferences between the marker and the reading device used for reading the marker, resulting in difficulties reading the marker.

By reading the first identification marker by use of a reading device, information regarding the unique processing tool can be achieved via e.g. a smartphone app with access to a tool database. Said information can include e.g. geometrical data and/or data regarding the material composition of the tool body. Further information could be related to which type of processing element that is provided in the tool body and the material composition of said processing element.

The term "unexposed" is to be understood as workpiece residues are prevented from coming in contact with the first identification marker. The same meaning is applied to other unexposed parts.

According to an embodiment, the first identification marker is arranged at a surface of the first coupling part, and wherein the first identification marker comprises a plurality of first type modules and second type modules, each first type module being in level with the surface of the first coupling part surrounding the first identification marker, and each second type module comprising an indention with respect to said surface.

According to an embodiment, the first type modules and the second type modules have the same module size.

According to an embodiment, the first type modules and the second type modules have the longest dimension of 0,5 mm or less, preferably 0,25 mm or less, more preferably 0,13 mm or less.

According to an embodiment, the second type modules have a depth of between 5 and 100 µm, preferably between 10 and 50 µm, more preferably between 15 and 45 µm with respect to the surface surrounding the first identification marker.

According to an embodiment, the first coupling part is adapted to be coupled to a second coupling part, and wherein the first identification marker is positioned at the first coupling part such that it is positioned in an interface between the first coupling part and the second coupling part when the first coupling part is coupled to the second coupling part.

By arranging the first identification marker such that it will be positioned at an interface between the first coupling part and the second coupling part when they are coupled together, the first identification marker will become more unexposed, preferably completely unexposed, to the exterior of the processing tool when the processing tool is mounted to a connecting tool unit. The first identification marker will then be protected from the harsh environment surrounding the processing tool when performing, for example, rock drilling, and the risk of the first identification marker being damaged is reduced.

According to an embodiment, the first coupling part has a length L extending between the first end and the second end; and wherein the first identification marker is arranged, at least partly, at a distance I from the first end, wherein I ≤ L/4.

By having the first identification marker arranged close to the first end, the process of reading the information stored in it by use of a reading device is facilitated.

According to an embodiment, the first identification marker is etched, engraved, impressed, imprinted, or painted to the first coupling part. A particularly suitable way of arranging the first identification marker at the first coupling part is by laser engraving.

By having the first identification marker etched, engraved, impressed, imprinted, or painted to the first coupling part there is no need of any special marker holding units which would require a special design of the tool body in order to make room for such a marker holding unit. A further benefit of not requiring a special marker holding unit is that the risk of unbalances in the tool body can be reduced.

According to an embodiment, the first coupling part has a maximum diameter d, and the front end surface, the rear end surface, or the at least one side surface at which the first end is disposed has a diameter D, wherein D/2 ≤ d < D.

By having a first coupling part with a maximum diameter that is at least half of the diameter of the tool body surface at which the first end is disposed, a stable mounting is achieved between the processing tool and a connecting tool unit.

According to an embodiment, the first coupling part comprises a threaded portion, wherein the first identification marker is arranged between the first end and the threaded portion.

By arranging the first coupling part with a threaded portion, a stable mounting is achieved between the processing tool and a connecting tool unit.

According to an embodiment, the first coupling part comprises a frusto-conical surface, and wherein the first identification marker is arranged at the frusto-conical surface.

By having the first identification marker arranged at the frusto-conical surface, the process of reading the information stored in it by use of a reading device is facilitated, due to the inclination of the first identification marker.

The object of the present invention is further achieved by means of a processing tool assembly, comprising:
- a processing tool as disclosed above; and
- a connecting tool unit; wherein
the connecting tool unit comprises a second coupling part, wherein the second coupling part being one of:
- a male coupling part adapted to be coupled to the female coupling part of the processing tool; and
- a female coupling part adapted to be coupled to the male coupling part of the processing tool;
wherein the first coupling part is coupled to the second coupling part, and wherein the first identification marker is positioned in an interface between the first coupling part and the second coupling part.

By arranging the first identification marker in an interface between the first coupling part and the second coupling part, the first identification marker will be protected from the harsh environment surrounding the material processing tool assembly when performing, for example, rock drilling, and the risk of the first identification marker being damaged is reduced.

The processing tool can be e.g. a milling cutter, a metal drilling tool, a turning tool or a rock drill bit.

The connecting tool unit can be, for example, a drill string rod, a computer numerical control (CNC) machine part, or and adapter/extension for connecting the processing tool to a machine unit.

According to an embodiment, the second coupling part comprises a second identification marker comprising identification information of the connecting tool unit.

By arranging a second identification marker at the second coupling part, the connecting tool unit can be uniquely identified and information such as geometrical data and material data associated with the uniquely identified connecting tool unit becomes accessible to the operator. By reading both the first and the second identification marker, information regarding the processing assembly is accessible by the operator.

According to an embodiment, the second identification marker is positioned in the interface between the first coupling part and the second coupling part.

By arranging the second identification marker in the interface between the first coupling part and the second coupling part, the second identification marker will be protected from the harsh environment surrounding the processing tool assembly when performing, for example, rock drilling, and the risk of the second identification marker being damaged is reduced.

### BRIEF DESCRIPTION OF THE DRAWINGS

Fig. 1 illustrates a first embodiment of a processing tool in form of a metal cutting tool,
Fig. 2 illustrates a cross-sectional view of a second embodiment of a processing tool in form of a rock drilling tool,
Fig. 3 illustrates a cross-sectional view of the rock drilling tool of figure 2 in a mounted state,
Fig. 4 illustrates a material processing tool assembly in form of a drill arrangement.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

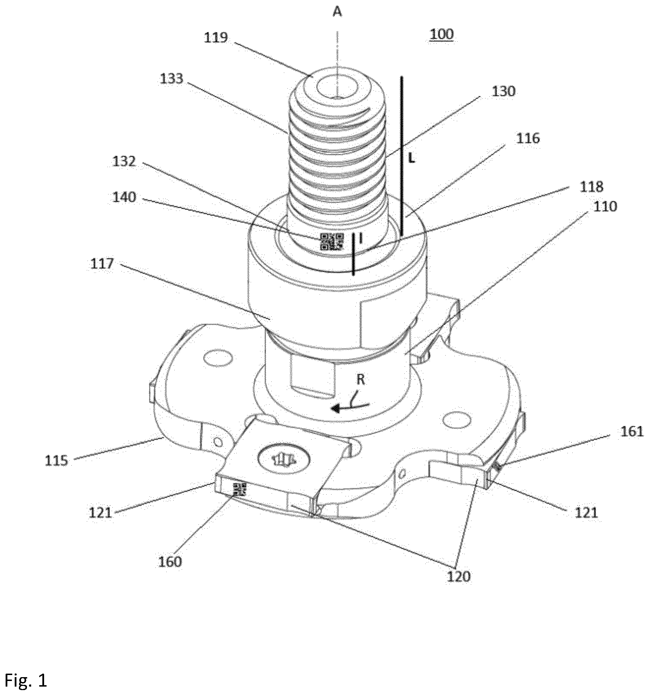

Figure 1 illustrates a processing tool in form of a metal cutting tool (100), more precisely, figure 1 illustrates a milling cutter. The milling cutter (100) comprises a tool body (110) in form of a milling cutter body having a central longitudinal axis A. The milling cutter body (110) comprising a front end surface (115), a rear end surface (116), and a side surface (117) connecting the front end surface (115) and the rear end surface (116). The milling cutter body (110) further comprises a first coupling part (130), in form of a male coupling part, extending between a first end (118) disposed at the rear end surface (116), and a second end (119). The first coupling part (130) is adapted to be coupled to a second coupling part in form of a female coupling part arranged at a connecting tool unit. The connecting tool unit can be e.g. a computer numerical control (CNC) machine spindle, or an adapter/extension for connecting the milling cutter (100) to the machine spindle. When mounted to the machine spindle, the machine spindle will make the milling cutter rotating in a direction R around the central longitudinal axis A. The first coupling part (130) comprises a threaded portion (133). The first coupling part (130) further comprises a frusto-conical surface (132) extending in the direction of the central longitudinal axis A. A first identification marker (140) in form of a DataMatrix code is arranged at the frusto-conical surface (132) between the first end (118) and the threaded portion (133). The first identification marker (140) comprising identification information of the milling cutter (100), which can be e.g. an identification number identifying the unique milling cutter body (110). The first coupling part (130) has a length L extending between the first end (118) and the second end (119) and the first identification marker (140) is partly arranged at a distance I from the first end (118). The milling cutter (100) further comprises a plurality of processing elements (120) in form of cutting inserts provided with cutting edges (121) for cutting a workpiece material. The cutting inserts (120) are provided with third identification markers (160, 161) in form of a DataMatrix codes. The third identification markers (160, 161) comprise cutting insert identification data which can be e.g. an identification number identifying the unique cutting insert (120).

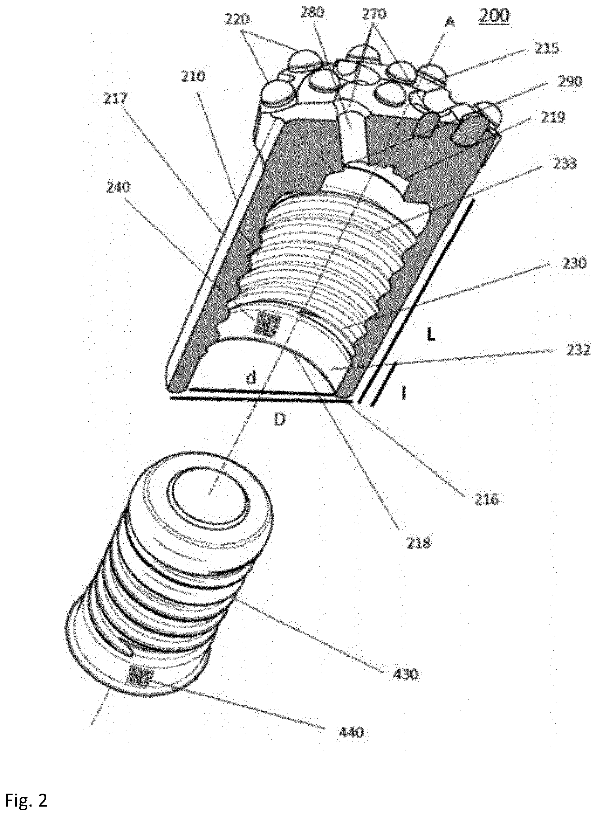

Figure 2 illustrates a cross-sectional view of a second embodiment of a processing tool in form of a rock drilling tool, more precisely, figure 2 illustrates a rock drill bit. The rock drill bit (200) comprises a tool body (210) in form of a drill bit body having a central longitudinal axis A. The drill bit body (210) comprising a front end surface (215), a rear end surface (216), and a side surface (217) connecting the front end surface (215) and the rear end surface (216). The drill bit body (210) further comprises a first coupling part (230), in the form of a female coupling part, extending between a first end (218) disposed at the rear end surface (216), and a second end (219). The first coupling part (230) has a length L extending from the first end (218) to the second end (219). The first coupling part (230) is adapted to be coupled to a second coupling part in form of a male coupling part (430) arranged at a connecting tool unit (400). The connecting tool unit (400) can be e.g. a drill string rod for connecting the rock drill bit to a hydraulically driven piston or to a further drill string rod if necessary. The first coupling part (230) comprises a threaded portion (233). The first coupling part (230) further comprises a frusto-conical surface (232) extending in the direction of the central longitudinal axis A. A first identification marker (240) in form of a DataMatrix code is arranged at the frusto-conical surface (232) between the first end (218) and the threaded portion (233), partly, at a distance I from the first end (218). The first identification marker (240) comprising identification information of the rock drill bit (200), which can be e.g. an identification number identifying the unique drill bit body (210). The first coupling part (230) has a maximum diameter d, and the rear end surface has a diameter D. The rock drill bit further comprises a plurality of processing elements (220) in form of buttons for breaking the rock. The buttons (220) are mounted in cavities in the drill bit body (210), where only the top part of the buttons (220) is extending from the front end surface (215). The buttons (220) may be provided with third identification markers (not shown), which are preferably arranged at the part of the buttons not being exposed to the exterior of the rock drill bit (200). The drill bit body (210) further comprises a plurality of flushing media channels (280). Each of the flushing media channels (280) has a flushing media outlet (270) arranged in the front end surface (215) and a flushing media inlet (290) arranged in the first coupling part (230). Flushing media can be provided to the rock drill bit (200) via the connecting tool unit (400) in order to flush residues and crushings from the bore hole and maintain the desired drilling performance during drilling. Figure 2 further illustrates said second coupling part (430) in form of male coupling part. The connecting tool unit (400) is not illustrated in figure 2. A second identification marker (440) in form of a DataMatrix code is arranged at the second coupling part (430). The second identification marker (440) comprises connecting tool unit identification data which can be e.g. an identification number identifying the unique connecting tool unit (400).

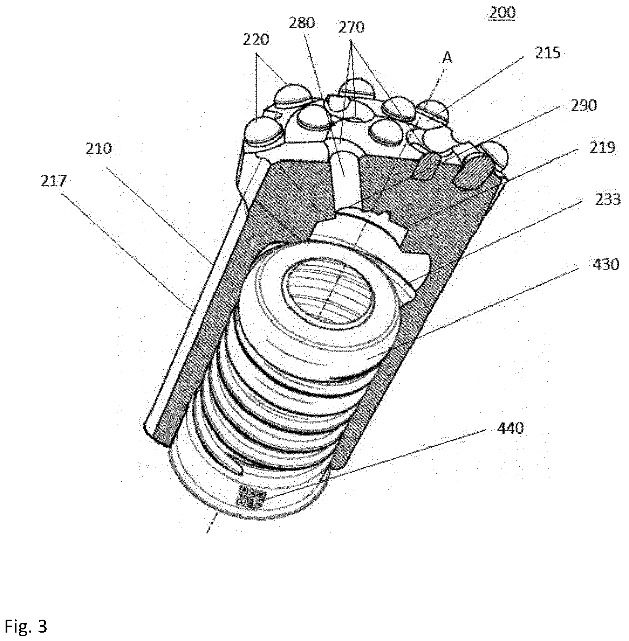

Figure 3 illustrates a cross-sectional view of the rock drilling tool illustrated in figure 2 in a mounted state. In figure 3 it can be seen that the first identification marker (240), which is not shown in the figure due to being positioned in the interface between the first coupling part (230) and the second coupling part (430), is unexposed to the exterior of the rock drill bit (200) when the rock drill bit (200) is mounted to a connecting tool unit (400).

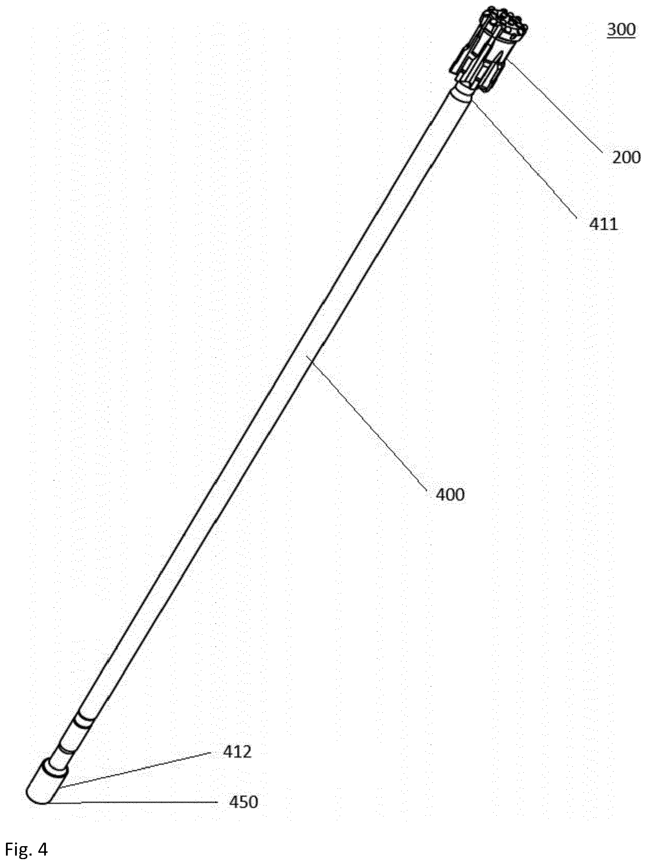

Figure 4 illustrates a processing assembly (300) in form of a drill assembly. The drill assembly (300) comprises a rock drill bit (200) as illustrated in figure 2, and a connecting tool unit (400) in form of a drill string rod. The drill string rod (400) comprises a front end (411) comprising said second coupling part (430). The rock drill bit (200) and the drill string rod (400) being subsequently attached to each other in the direction of the central longitudinal axis A by coupling between the first coupling part (230) and the second coupling part (430). The drill string rod (400) further comprises a rear end (412). A third coupling part (450) is arranged at the rear end (412). The third coupling part (450) is used to connect the drill string rod (400) to a hydraulically driven piston or to a further drill string rod in order to extend the drill assembly (300) if necessary.

## Claims

1. A processing tool (100, 200) comprising:
- a tool body (110,210) comprising:
- a front end surface (115,215),
- a rear end surface (116,216),
- at least one side surface (117,217) connecting the front end surface (115,215) and the rear end surface (116,216), and
- a first coupling part (130,230) extending between a first end (118,218) and a second end (119,219), wherein the first end (118,218) is disposed at, at least one of, the front end surface (115,215), the rear end surface (116,216), or the at least one side surface (117,217), wherein the first coupling part (130,230) being one of:
- a female coupling part (230); and
- a male coupling part (130);
**characterized in that** the first coupling part (130,230) comprises a first identification marker (140,240) comprising identification information of the processing tool (100,200).

2. The processing tool (100,200) according to claim 1, wherein the first coupling part (140,240) is adapted to be coupled to a second coupling part (430), and wherein the first identification marker (140,240) is positioned at the first coupling part (130,230) such that it is positioned in an interface between the first coupling part (130,230) and the second coupling part (430) when the first coupling part (130,230) is coupled to the second coupling part (430).

3. The processing tool (100,200) according to any of the preceding claims, wherein the first coupling part (130,230) has a length L extending between the first end (118,218) and the second end (119,219); and wherein the first identification marker (140,240) is arranged, at least partly, at a distance I from the first end (118,218), wherein I ≤ L/4.

4. The processing tool (100,200) according to any of the preceding claims, wherein the first identification marker (140,240) is etched, engraved, impressed, imprinted or painted to the first coupling part (130,230).

5. The processing tool (100,200) according to any of the preceding claims, wherein the first coupling part (130,230) has a maximum diameter d, and the front end surface (115,215), the rear end surface (116,216), or the at least one side surface (117,217) at which the first end (118,218) is disposed has a diameter D, wherein D/2 ≤ d < D.

6. The processing tool (100,200) according to any of the preceding claims, wherein the first coupling part (130,230) comprises a threaded portion (133,233); and wherein the first identification marker (140,240) is arranged between the first end (118,218) and the threaded portion (133,233).

7. The processing tool (100,200) according to any of the previous claims, wherein the first coupling part (130,230) comprises a frusto-conical surface (132,232), and wherein the first identification marker (140,240) is arranged at the frusto-conical surface (132,232).

8. A processing tool assembly (300), comprising:
- a processing tool (100,200) according to any of claims 1-7, and
- a connecting tool unit (400); wherein
the connecting tool unit (400) comprises a second coupling part (430), wherein the second coupling part (430) being one of:
- a male coupling part (430) adapted to be coupled to the female coupling part (230) of the processing tool (100,200); and
- a female coupling part adapted to be coupled to the male coupling part (130) of the processing tool (100,200);
wherein the first coupling part (130,230) is coupled to the second coupling part (430), and wherein the first identification marker (140,240) is positioned in an interface between the first coupling part (130,230) and the second coupling part (430).

9. The processing tool assembly (300) according to claim 8, wherein the second coupling part (430) comprises a second identification marker (440) comprising identification information of the connecting tool unit (400).

10. The processing tool assembly (300) according to claim 9, wherein the second identification marker (440) is positioned in the interface between the first coupling part (130,230) and the second coupling part (430).
